# EUROPEAN PATENT APPLICATION

(11) **EP 3 771 239 A1**
(43) Date of publication of application: **27.01.2021**
(21) Application number: 19770257.4
(22) Date of filing: 04.01.2019
(51) Int. Cl.: H04W 4/80

(54) **RESOURCE ASSIGNMENT METHOD, RELATED DEVICE, SYSTEM, AND STORAGE MEDIUM**

(30) Priority: 23.03.2018 CN 201810249361
(71) Applicant: Zhejiang Hanshow Technology Co. Ltd, Jiaxing Zhejiang 314000 (CN)
(72) Inventor: JIANG, Qi, Jiaxing, Zhejiang 314000 (CN); LIANG, Min, Jiaxing, Zhejiang 314000 (CN); CHEN, Jun, Jiaxing, Zhejiang 314000 (CN); HOU, Shiguo, Jiaxing, Zhejiang 314000 (CN)
(74) Representative: Boult Wade Tennant LLP
(86) International application number: PCT/CN2019/070397
(87) International publication number: WO 2019/179212

(57) **Abstract**

The present disclosure discloses a method for allocating resources and related device, system and storage medium. The method comprises: acquiring a first information set, wherein the first information set comprises energy information monitored by any one of base stations in a base station group to be allocated with resources and wirelessly broadcast by other base stations in the base station group on a predetermined first wireless channel resource; determining a distance relationship between the base stations in the base station group based on the energy information; and allocating a corresponding second wireless channel resource to each of the base stations in the base station group based on the distance relationship, wherein the second wireless channel resource is configured for the base station to establish communication with at least one electronic label associated therewith. According to the technical solutions of the embodiments of the present disclosure, available interference-free resources can be allocated to the base stations according to the real environment of the base stations, thereby improving the concurrency of the base stations and maximizing the throughputs of the base stations.

## Description

The present disclosure claims priority to Chinese patent application No. 201810249361.8, filed on March 23, 2018 and entitled "Method for allocating resources and related device, system and storage medium", which is incorporated herein by reference in its entirety.

### TECHNICAL FIELD

The present disclosure generally relates to the field of wireless communication technologies, and particularly, to the field of electronic label technologies, and more particularly to a method for allocating resources and a related device, system, and storage medium.

### BACKGROUND

The Radio Frequency Identification (RFID) technology is an automatic identification technology that emerged in the 1990s, and it runs in the 2.4GHz ISM (Industrial Scientific Medical) waveband without applying for a license, wherein it has a wider bandwidth, more available resources, and stronger anti-interference capability than in other frequency bands. As an open wireless communication standard, it can also replace a plurality of cable connection schemes at present. Through a unified short-range wireless link, information resources can be shared among various information devices to achieve convenient, fast, flexible, safe, low-cost and low power-consumptive voice and data communications. However, the public frequency band is also used by other wireless networks of different standards, such as WIFI. As a result, the available channel resources of the public frequency band are very scarce in the actual application scenarios.

When the base stations are deployed at present, the channel resources are allocated artificially, which just simply avoids the conventional channel resources for WIFI, and due to differences among the wireless environments in different regions, the implementation efficiency of the artificial channel allocation is low, and the available channel resources cannot be used according to the real wireless environment. This also results in low concurrency and low communication efficiency of the base stations.

### SUMMARY

In view of the above defects or deficiencies in the prior art, it is desirable to provide a technical solution capable of dynamically allocating wireless channel resources according to a wireless environment before electronic label communication.

In a first aspect, an embodiment of the present disclosure provides a method for allocating wireless resources, wherein the method is performed by a central management device and comprises:
acquiring a first information set, wherein the first information set comprises energy information monitored by any one of base stations in a base station group to be allocated with resources and wirelessly broadcast by other base stations in the base station group on a predetermined first wireless channel resource;
determining a distance relationship between the base stations in the base station group based on the energy information; and
allocating a corresponding second wireless channel resource to each of the base stations in the base station group based on the distance relationship, wherein the second wireless channel resource is configured for the base station to establish communication with at least one electronic label associated therewith.

In a second aspect, an embodiment of the present disclosure provides a method for allocating wireless resources, wherein the method is performed by any one of base stations in a base station group, and comprises:
reporting a first information set to a central management device, wherein the first information set comprises energy information monitored by the base station and wirelessly broadcast by other base stations in the base station group on a predetermined first wireless channel resource;
receiving an allocated second wireless channel resource from the central management device, wherein the second wireless channel resource is a wireless channel resource corresponding to the base station and allocated to the base station by the central management device based on a distance relationship between the base station and the other base stations, the second wireless channel resource is configured for the base station to establish communication with at least one electronic label associated therewith, and the distance relationship is determined by the central management device based on the energy information.

In a third aspect, an embodiment of the present disclosure provides a method for allocating wireless resources, wherein the method is applied to an electronic label system comprising a central management device and at least one base station group, and comprises:
reporting, by any base station in the base station group, a first information set to the central management device, wherein the first information set comprises energy information monitored by the base station and wirelessly broadcast by other base stations in the base station group on a predetermined first wireless channel resource;
determining, by the central management device, a distance relationship between the base stations in the base station group based on the energy information; and allocating a corresponding second wireless channel resource to each of the base stations in the base station group based on the distance relationship, wherein the second wireless channel resource is configured for the base station to establish communication with at least one electronic label associated therewith;
receiving, by the base station, the second wireless channel resource allocated by the central management device.

In a fourth aspect, an embodiment of the present disclosure provides a central management device, comprising:
one or more processors;
storage means configured to store one or more programs;
transceiving means configured to receive a first information set reported by any base station in a base station group, wherein the first information set comprises energy information monitored by the base station and wirelessly broadcast by other base stations in the base station group on a predetermined first wireless channel resource;
the processor configured to implement the method described in the embodiments of the present disclosure when executing the above programs.

In a fifth aspect, an embodiment of the present disclosure provides a base station, wherein the base station is any base station in a base station group and comprises:
sending means configured to report a first information set to a central management device, wherein the first information set comprises energy information monitored by the base station and wirelessly broadcast by other base stations in the base station group on a predetermined first wireless channel resource;
receiving means configured to receive a second wireless channel resource allocated by the central management device, wherein the second wireless channel resource is a wireless channel resource corresponding to the base station and allocated to the base station by the central management device based on a distance relationship between the base station and the other base stations, wherein the second wireless channel resource is configured for the base station to establish communication with at least one electronic label associated therewith, and the distance relationship is determined by the central management device based on the energy information.

In a sixth aspect, an embodiment of the present disclosure provides an electronic label system, comprising the central management device described in the embodiments of the present disclosure and at least two base stations described in the embodiments of the present disclosure.

In a seventh aspect, an embodiment of the present disclosure provides a computer readable storage medium with a computer program stored thereon, wherein the method described in the embodiments of the present disclosure is implemented when the program is executed by a processor.

The technical solutions for allocating wireless resources provided by the embodiments of the present disclosure can be used to solve the problem that the wireless resource allocation for the base stations in the electronic label system cannot reasonably utilize the wireless resources according to the real situation of the wireless environment. The distance relationship between the base stations is determined by obtaining the information set reported by any base station in the base station group, and wireless channel resources are allocated to each of the base stations using the distance relationship. By determining the distance relationship between base stations through the energy information, the situation of the wireless environment can be objectively and truly reflected, and based on the distance relationship between the base stations, a basis is provided for judging the parallel communication between the base stations at the same frequency, the throughput of the base stations is maximized and the interference caused by the resource allocation is avoided.

The embodiments of the present disclosure further dynamically adjust the channel resources by judging whether the allocated wireless channel resources have an interference, and use the newly allocated wireless channel resources to establish communication in a targeted manner through the channel indication message issued by the central management device, thereby further improving the communication efficiency, realizing the coexistence between the electronic label system and other wireless communication devices of the same frequency band, and maximizing the utilization rate of the available channels.

### BRIEF DESCRIPTION OF DRAWINGS

By reading the detailed description of the non-limiting embodiments with reference to the following drawings, other features, objects and advantages of the present disclosure will become more apparent:
FIG 1 illustrates a schematic block diagram of an application scenario of an electronic label communication in an embodiment of the present disclosure;
FIG 2 illustrates a schematic flowchart of a method for allocating wireless resources applied to an electronic label system provided by an embodiment of the present disclosure;
FIG 3 illustrates a schematic flowchart of a method for allocating wireless resources provided by an embodiment of the present disclosure;
FIG 4 illustrates a schematic flowchart of another method for allocating wireless resources provided by an embodiment of the present disclosure;
FIG 5 illustrates a schematic structural diagram of a central management device provided by an embodiment of the present disclosure;
FIG 6 illustrates another schematic structural diagram of a central management device provided by an embodiment of the present disclosure;
FIG 7 illustrates a schematic structural diagram of a base station provided by an embodiment of the present disclosure;
FIG 8 illustrates another schematic structural diagram of a base station provided by an embodiment of the present disclosure
FIG 9 illustrates a schematic structural diagram of an electronic label system provided by an embodiment of the present disclosure.

### DETAILED DESCRIPTION

The present disclosure will be further described in detail below with reference to the drawings and in conjunction with the embodiments. It can be understood that the specific embodiments described here are only used to explain the related invention, rather than limiting the invention. In addition, it should be noted that, for the convenience of description, only the parts related to the invention are illustrated in the drawings.

It should be noted that the embodiments in the present disclosure and the features in the embodiments can be combined with each other if there is no conflict. Hereinafter, the present disclosure will be described in detail with reference to the drawings and in conjunction with the embodiments.

The electronic label can also be referred to as an electronic price label, or an Electronic Shelf Label (ESL), which has a fast and accurate price display function and can improve the customer satisfaction. A complete set of electronic label system comprises at least a base station (or referred to as a wireless access point), an electronic label, a central management device (which can also be referred to as a server system), etc.

The electronic label system in the embodiment of the present disclosure comprises a plurality of central management devices, a plurality of base stations, and a plurality of electronic labels under the jurisdiction of each of the base stations. The central management device is responsible for allocating wireless channel resources to each of the base stations to prevent the interference between the adjacent base stations. The base station establish communication with each of the electronic labels under the jurisdiction thereof using pre-allocated wireless channel resources. Since there are a plurality of base stations in real application scenarios, such as more than 50, and the total number of the electronic labels under their jurisdiction is about 50,000 or more, when there are different degrees of interferences near the base stations, the electronic labels under the jurisdiction of the base stations may be unavoidably interfered with.

In the embodiments of the present disclosure, the central management device analyzes the actual wireless environment in which the base stations are deployed according to the energy information, and then wireless channel resources are dynamically allocated to the base stations based on the environment.

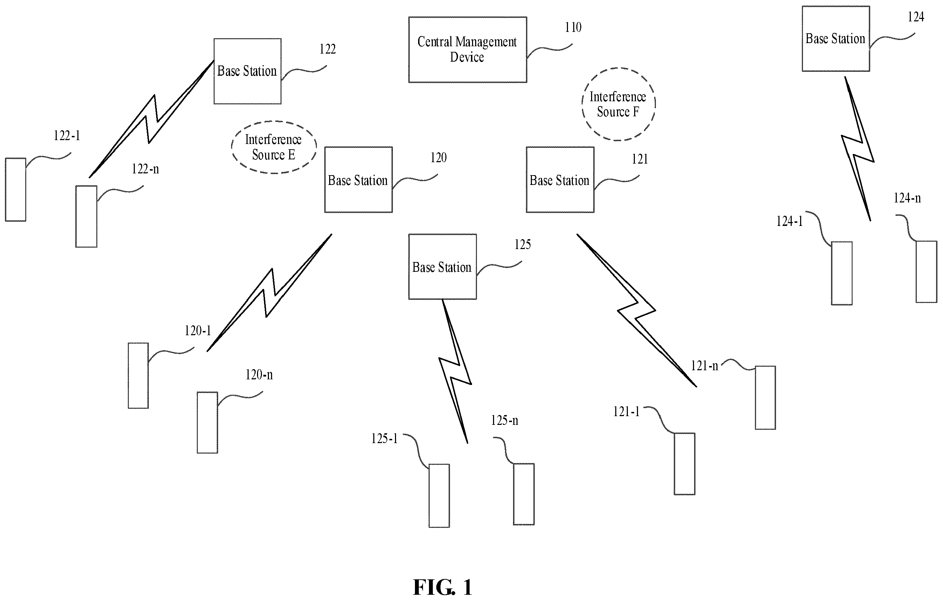

Please refer to FIG 1, FIG 1 illustrates a schematic block diagram of an application scenario of an electronic label communication in an embodiment of the present disclosure.

In the application scenario illustrated in FIG 1, it may include a central management device 110, a base station group comprising a plurality of base stations (which may be, e.g., base stations 120, 121, 122, 123, 124 and 125), and a plurality of electronic labels associated with the base stations, such as electronic labels 120-1, 120-n, 121-1, 121-n, 122-1, 122-n, 124-1, 124-n, 125-1, 125-n, etc.

As illustrated in FIG 1, the central management device 110 is configured to manage and schedule respective base stations and electronic labels. The base stations 120, 121, 122, 123, 124, and 125 are respectively configured to communicate with electronic labels associated therewith, and perform functions such as channel scanning and frequency hopping communication.

In which, the electronic labels 120-1 and 120-n are under the jurisdiction of the base station 120, and the electronic labels 121-1 and 121-n are under the jurisdiction of the base station 121, and so on.

In the application scenario illustrated in FIG 1, interferences from other wireless networks in the same frequency band, such as interference sources E and F, may exist near the base station. These interference sources may be long-term, short-term or temporary. Considering the limited channel resources of the 2.4GHz frequency band, with respect to the long-term or short-term interference sources, it is desired to provide a wireless resource management method applied to an electronic label system to dynamically adjust wireless resources to realize coexistence of the electronic label communication protocol and other communication protocols in the same frequency band.

Based on the application scenario illustrated in FIG 1, an embodiment of the present disclosure proposes a method for allocating wireless resources applied to an electronic label system.

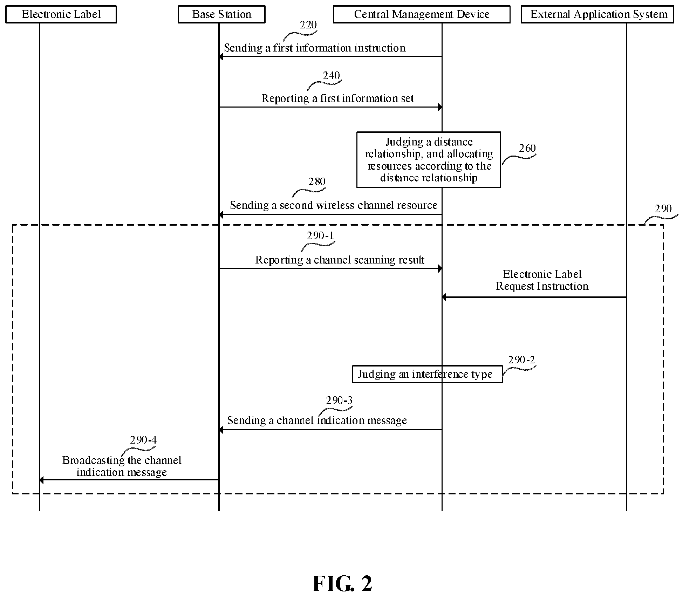

Please refer to FIG 2, FIG 2 illustrates a schematic flowchart of a method for allocating wireless resources applied to an electronic label system according to an embodiment of the present disclosure.

As illustrated in FIG 2, the method comprises:
Step 220: sending, by a central management device, a first information instruction to each of base stations in a base station group to be allocated with resources, wherein the first information instruction is configured to instruct each of the base stations in the base station group to orderly perform wireless broadcasting on a first wireless channel resource.

In the embodiment of the present disclosure, the base station group to be allocated with resources, such as base stations 120, 121, 122, 123, 124, and 125, allocate channel resources through the central management device in a unified manner. The central management device firstly sends an information instruction to each of the base stations in the base station group to be allocated with resources, wherein the information instruction instructs the base stations to orderly perform wireless broadcasting on a first wireless channel resource f₁. The information instruction may be a broadcast channel indication instruction, or any other instruction that carries broadcast channel resources.

Step 240: reporting, by any one of the base stations in the base station group, a first information set to the central management device, wherein the first information set comprises energy information monitored by any one of the base stations in the base station group to be allocated with resources and wirelessly broadcast by other base stations in the base station group on a predetermined first wireless channel resource.

In the embodiment of the present disclosure, the central management device receives the first information sets reported by the base stations, and each of the base stations is responsible for monitoring the energy information wirelessly broadcast by other base stations on the first wireless channel resource f_{1,} integrating and packing energy information of other base stations monitored by it after acquiring a monitoring result, and actively reporting to the central management device. The first information set reported by the base station 120 for example may comprise {B₁₂₀₋₁₂₁, B₁₂₀₋₁₂₂, B₁₂₀₋₁₂₃, B₁₂₀₋₁₂₄, B₁₂₀₋₁₂₅}, the first information set reported by the base station 121 for example may comprise {B₁₂₁₋₁₂₀ , B₁₂₁₋₁₂₂, B₁₂₁₋₁₂₃, B₁₂₁₋₁₂₄, B₁₂₁₋₁₂₅₁, the first information set reported by the base station 122 for example may comprise {B₁₂₂₋₁₂₀, B₁₂₂₋₁₂₁, B₁₂₂₋₁₂₃, B₁₂₂₋₁₂₄, B₁₂₂₋₁₂₅} and so on, wherein B₁₂₀₋₁₂₁ is energy information of a signal broadcast by the base station 121 and received by the base station 120, and B₁₂₀₋₁₂₂ is energy information of a signal broadcast by the base station 122 and received by the base station 120, and the others are understood similarly.

After receiving the reported information sets, the central management device processes and acquires the respective energy information to judge a distance relationship between the base stations.

Step 260: determining, by the central management device, a distance relationship between the base stations in the base station group based on the energy information; then allocating a corresponding second wireless channel resource to each of the base stations in the base station group based on the distance relationship, wherein the second wireless channel resource is configured for the base station to establish communication with at least one electronic label associated therewith.

In the embodiment of the present disclosure, after the central management device receives the reported first information set, a processor thereof further acquires the first information set for analysis and judgment.

The central management device may judge a relative distance between the base stations based on the energy information, and then allocate wireless channel resources to the distance-related base stations based on such relative distance, so that the distance-related base stations can communicate with at least one electronic label associated therewith without interference.

In which, the energy information may be energy value information of other base stations monitored by the base station, such as an energy value acquired through an energy detection algorithm.

The distance is judged based on the energy information, for example, judged from the energy value and a preset energy threshold, or judged according to whether the energy value lies within a preset energy threshold range. The energy threshold range may be obtained by learning according to a machine learning algorithm, or preset according to engineering experiences. As the energy value increases, the interference becomes more serious or the wireless communication is in progress. As the energy value decreases, the interference degree becomes lower. For example, the first information set {B₁₂₀₋₁₂₁, B₁₂₀₋₁₂₂, B₁₂₀₋₁₂₃, B₁₂₀₋₁₂₄, B₁₂₀₋₁₂₅} reported by the base station 120 is judged.

Taking the judgment that the energy value lies within the preset energy range as an example, the preset energy range may be, for example, [0, 60db], [60db to 80db], [80db to 100db] and [100db, +]. When B₁₂₀₋₁₂₁ lies within [100, +], it means that the base station 120 and the base station 121 are very close to each other, and wireless channel resources of different frequency bands need to be used, while the different frequency bands need to have larger intervals. When B₁₂₀₋₁₂₁ lies within [0, 60db], it means that the base station 120 and the base station 121 are far away from each other, and no signal interference will be caused even if the wireless channel resources of the same frequency band are used.

Step 280: receiving, by the base station, a second wireless channel resource allocated by the central management device.

In the embodiment of the present disclosure, the central management device allocates a corresponding second wireless channel resource to each of the base stations in the base station group based on the distance relationship. The second wireless channel resource may serve as a default channel resource of the base station and at least one electronic label associated with the base station. Generally, the base station establish communication with the electronic labels associated therewith by using the default channel resources which will not be changed after the current communication is ended. However, the default channel resources may be interfered with in different degrees as the wireless environment changes, resulting in the resource allocated by the central management device cannot be used normally.

In order to overcome the interferences caused by other wireless devices around the base station, the embodiment of the present disclosure can also adjust the default wireless channel resources based on the changing wireless environment, so as to improve the communication efficiency of the system.

Optionally, the method may further comprise:
Step 290: in response to a trigger event, acquiring, by the central management device, a channel scanning result within a preset time range corresponding to the trigger event, wherein the channel scanning result comprises a monitoring result of a corresponding second wireless channel resource pre-allocated to each of the base stations in the base station group, and the second wireless channel resource is configured for the base station to establish communication with at least one electronic label associated therewith;
judging an interference type of the second wireless channel resource based on the channel scanning result within the preset time range corresponding to the trigger event;
generating a channel indication message based on the interference type, wherein the channel indication message comprises a third wireless channel resource, and configured to indicate a use authorization of the third wireless channel resource for the base station and at least one electronic label associated therewith.

In the embodiment of the present disclosure, the trigger event for example may be that the central management device 110 receives the reported channel scanning results from the base stations 120 and 121 and/or electronic label request instructions for the electronic labels 120-1 and 120-n and/or 121-1 and 121-n from an external application system.

When the central management device 110 receives the channel scanning results reported by the base stations or when the central management device 110 receives the electronic label request instructions for the electronic labels from the external application system, the processor of the central management device 110 is enabled by means of event triggering to acquire the channel scanning results within the preset time range corresponding to the trigger event. For example, the trigger event is that the base station 120 reports a channel scanning result, when receiving the channel scanning result reported by the base station 120, the central management device 110 is triggered to acquire the channel scanning result within the preset time range, and then judges whether there is an interference on the second wireless channel resource f₁₂₀ pre-allocated to the base station 120 and the interference type based on the channel scanning result within the preset time range. The preset time range may be the channel scanning results reported by the base station 120 in the past 24 hours. The specific time here is limited only for better understanding of the present disclosure, and there is no limitation therefor.

For another instance, the trigger event for example may be that when receiving the electronic label request instructions for the electronic labels 121-₁ and 121-ₙ from the external application system, the central management device 110 is triggered to acquire the channel scanning results within the preset time range, and then judges whether there is an interference on the second wireless channel resource f₁₂₁ pre-allocated to the base station 121 and the interference type based on the channel scanning result within the preset time range. The preset time range may be the channel scanning results reported by the base station 121 within 4 hours before the trigger event is received. The specific time here is limited only for better understanding of the present disclosure, and there is no limitation therefor.

The processor of the central management device 110 judges the interference type of the first wireless channel resource based on the acquired channel scanning result within the preset time range, generates a channel indication message according to the interference type, and includes a third wireless channel resource in the channel indication message to indicate the base station to establish communication with at least one electronic label under the jurisdiction thereof according to a use authorization of the third wireless channel resource indicated by the channel indication message.

Taking the judgment of the interference type of the second wireless channel resource f₁₂₀ as an example, the embodiment of the present disclosure is further described.

When judging that the second wireless channel resource f₁₂₀ is under long-term interference, the processor of the central management device 110 allocates the third wireless channel resource f_{120'} and instructs the base station 121 to take the third wireless channel resource f_{120'} as the default channel resource between the base station 120 and the electronic labels 120-₁ and 120-ₙ after completing the communication with the electronic labels 120-₁ and 120-ₙ using the third wireless channel resource f_{120'}, and directly use the third wireless channel resource f_{120'} for a next communication, thereby ensuring the communication between the base station 120 and the electronic labels 120-₁ and 120-ₙ.

When judging that the second wireless channel resource f₁₂₀ is under short-term interference, the central management device 110 allocates the third wireless channel resource f_{120'} and instructs the base station 102 to release the third wireless channel resource f_{120'} after completing the communication with the electronic labels 120-₁ and 120-ₙ using the third wireless channel resource f_{120'}, and still use the second wireless channel resource f₁₂₀ for a next communication, thereby ensuring the communication between the base station 120 and the electronic labels 120₋₁ and 120-ₙ.

In the embodiment of the present disclosure, the central management device 110 judges the managed base stations one by one, and adjusts the resources seriatim according to the judgment result, so as to achieve the targeted frequency hopping strategy control and dynamically adjust the communication resources to ensure the communication efficiency.

Optionally, the method may further comprise:
The base station receives the channel indication message from the central management device, and then controls at least one electronic label associated therewith to establish communication according to the use authorization of the third wireless channel resource indicated by the channel indication message.

The present disclosure analyzes the distance relationship between the base stations through the energy information reported by the base stations, and reasonably allocates the resources according to the distance relationship, thereby reusing the resources, improving the concurrency of the system, and increasing the channel utilization rate. The present disclosure further provides the optimization strategy for the channel resources, dynamically adjusts the wireless channel resources based on the interference type, and solves the interference problem in a targeted manner.

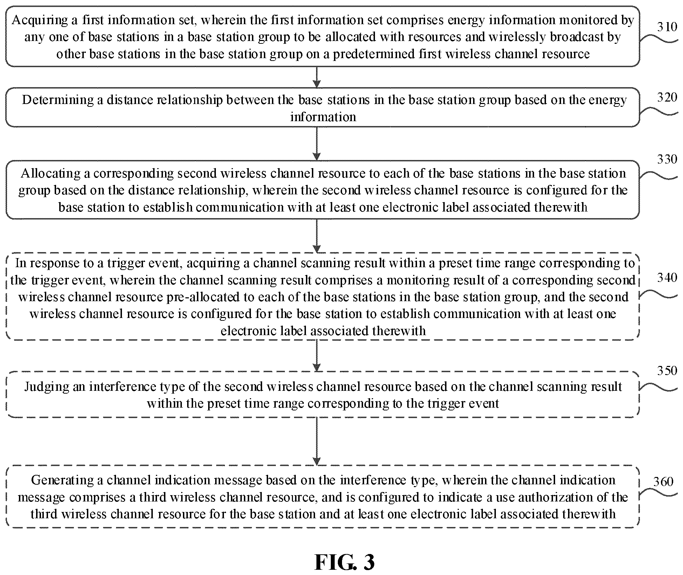

Based on the application scenario illustrated in FIG 1, an embodiment of the present disclosure provides a method for allocating wireless resources. Please refer to FIG 3, which illustrates a schematic flowchart of a method for allocating wireless resources provided by an embodiment of the present disclosure, and the method is described from the perspective of the central management device 110.

As illustrated in FIG 3, the method may comprise:
Step 310: acquiring a first information set, wherein the first information set comprises energy information monitored by any one of base stations in a base station group to be allocated with resources and wirelessly broadcast by other base stations in the base station group on a predetermined first wireless channel resource.

In the embodiment of the present disclosure, the central management device 110 receives the respective first information sets reported by the base stations 120, 121, 122, 123, 124 and 125, and the first information set for example may be {B₁₂₀₋₁₂₁, B₁₂₀₋₁₂₂, B₁₂₀₋₁₂₃, B₁₂₀₋₁₂₄, B₁₂₀₋₁₂₅}, wherein B is energy information monitored by the base station and wirelessly broadcast by other base stations on the predetermined first wireless channel resource.

Step 320: determining a distance relationship between the base stations in the base station group based on the energy information.

In the embodiment of the present disclosure, the central management device acquires the energy information of each of the base stations from the first information set, and then judges the distance of each of the base stations based on the energy information. For example, the judgment may be made through the energy value and the preset energy threshold, or according to whether the energy value lies within the preset energy threshold range, or according to a result of sorting the energy information in the first information set.

In which, the preset energy threshold and the energy threshold range may be obtained by learning according to a machine learning algorithm, or preset according to engineering experiences. As the energy value increases, the interference becomes more serious or the wireless communication is in progress. As the energy value decreases, the interference degree becomes lower.

In which, the energy threshold range for example may comprise a plurality of threshold ranges, such as a first threshold range [0, 60db], a second threshold range [60db to 80db], a third threshold range [80db to 100db], and a fourth threshold range [100db, +]. In which, a distance relationship corresponding to the first threshold range is a second distance relationship, and a distance relationship corresponding to the second, third, and fourth threshold ranges is a first distance relationship. In the embodiment of the present disclosure, a relationship between the base stations may be identified by a distance relationship. The distance relationships may be classified into the first distance relationship and the second distance relationship according to their influences on the use of the frequency band. The first distance relationship indicates that two distance-related base stations can use different second wireless channel resources to respectively establish communication with at least one electronic label associated therewith, without interfering with each other. The second distance relationship indicates that two distance-related base stations can use the same second wireless channel resource to respectively establish communication with at least one electronic label associated therewith, without interfering with each other. According to different threshold ranges corresponding to the energy information, the first distance relationship may also be divided into a plurality of subtypes, such as a first subtype, a second subtype, and a third subtype.

Regarding the second distance relationship, the wireless channel resources to be allocated may be in the same frequency band. Regarding the first distance relationship, the wireless channel resources to be allocated have to be in different frequency bands, and a certain interval between different frequency bands is required. Regarding the first subtype of the first distance relationship, the interval between the wireless channel resources to be allocated may be small, such as 1M or 2M. Regarding the third subtype of the first distance relationship, the interval between wireless channel resources to be allocated may be large, such as 5M.

For example, the distance relationship corresponding to the second threshold range is the first subtype, which means that the distance between the two base stations is large, and the interference degree is low, so the wireless channel resources to be allocated needs to meet the interval of 1M. The distance relationship corresponding to the third threshold range is the second subtype, which means that the distance between the two base stations is closer than that of the first subtype, and the wireless channel resources to be allocated needs to meet a larger interval, such as 2M. The distance relationship corresponding to the third threshold range is the third subtype, which means that the distance between the two base stations is closer than that of the second subtype, and the wireless channel resources to be allocated needs to meet an even larger interval, such as 3M.

Regarding the division of the threshold range, the specific values 1M, 2M, and 3M of the interval between the frequency bands are only for the illustrative purpose rather than specific limitations. The division and values can be adjusted according to the specific environment.

Preferably, the energy information comprises an energy value, and the determining a distance relationship between the base stations in the base station group based on the energy information comprises:
judging an energy threshold range in which the energy value lies; and
determining a distance relationship between two base stations associated with the energy value according to the energy threshold range in which the energy value lies.

Step 330: allocating a corresponding second wireless channel resource to each of the base stations in the base station group based on the distance relationship, wherein the second wireless channel resource is configured for the base station to establish communication with at least one electronic label associated therewith.

In the embodiment of the present disclosure, after the distance relationship between the base stations is judged in step 320, the base station may be allocated with wireless channel resources according to a type corresponding to the distance relationship.

The distance relationship between the base stations may be obtained by judging according to the situation that the energy information lies within the preset energy threshold range. When the distance relationship comprises the first distance relationship, the allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being in the first distance relationship, the second wireless channel resources being separated by a preset interval frequency band, wherein the preset interval frequency band is corresponding to the first distance relationship.

When the first distance relationship comprises at least two subtypes, the allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being of the subtypes, the second wireless channel resources being separated by a preset interval frequency band, wherein the preset interval frequency band is corresponding to the subtypes.

For example, the central management device 110 receives the first information set reported by the base station 120, and the first information set for example may be {B₁₂₀₋₁₂₁, B₁₂₀₋₁₂₂, B₁₂₀₋₁₂₃, B₁₂₀₋₁₂₄, B₁₂₀₋₁₂₅}. The base station 120 monitors that B₁₂₀₋₁₂₁ of the base station 121 lies within [100, +], which means that the base station 120 and the base station 121 belong to the third subtype of the first distance relationship, and the allocation condition of the wireless channel resources which are corresponding to the third subtype needs to meet use of the wireless channel resources in different frequency bands, and a large interval is required between the different frequency bands.

According to the distance relationship between the base station 120 and the base station 121, if the central management device allocates the second wireless channel resource f₂ to the base station 120, the second wireless channel resource to be allocated to the base station 121 should at least satisfy f₂ plus a spacing frequency band which for example may be 3M, 5M, etc.

When the distance relationship comprises the second distance relationship, the allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being in the second distance relationship, wherein the second wireless channel resources are the same.

For example, the base station 120 monitors that B₁₂₀₋₁₂₁ of the base station 121 lies within [0, 60db], which means that the base station 120 and the base station 121 belong to the second distance relationship, and the allocation condition of the wireless channel resources which are corresponding to the second distance relationship may be the wireless channel resources in the same frequency band. Since the distance between the base station 120 and the base station 121 is very large, even if the wireless channel resources in the same frequency band are used, no signal interference will be caused.

In the embodiment of the present disclosure, after step 360, the second wireless channel resources may be further adjusted according to the trigger event acquired by the central management device, so as to improve the efficiency of resource management.

Optionally, the method may further comprise:
Step 340: in response to a trigger event, acquiring a channel scanning result within a preset time range corresponding to the trigger event, wherein the channel scanning result comprises a monitoring result of a corresponding second wireless channel resource pre-allocated to each of the base stations in the base station group, and the second wireless channel resource is configured for the base station to establish communication with at least one electronic label associated therewith;
Step 350: judging an interference type of the second wireless channel resource based on the channel scanning result within the preset time range corresponding to the trigger event;
Step 360: generating a channel indication message based on the interference type, wherein the channel indication message comprises a third wireless channel resource, and is configured to indicate a use authorization of the third wireless channel resource for the base station and at least one electronic label associated therewith.

While the channel scanning result within the preset time range corresponding to the trigger event is acquired in response to the trigger event, the preset condition corresponding to the trigger event is also acquired, or the preset condition corresponding to the trigger event is determined in response to the trigger event, or a default program is executed to call the preset conditions corresponding to the trigger event when the trigger event is received. The preset condition here, for example, may be a threshold such as the first threshold and/or the second threshold. The values of the first threshold and the second threshold for example may be an average number of times based on historical statistics of the system or the number of times set based on experiences. The values of the first threshold and the second threshold are not limited here.

The interference type of the first wireless channel resource is judged based on the channel scanning result within the preset time range corresponding to the trigger event.

In the embodiment of the present disclosure, the interference type of the first wireless channel resource is judged based on the channel scanning result within the preset time range, so as to determine the actual situation of the surrounding environment of the base station.

Optionally, an interference frequentness of the first wireless channel resource is calculated based on the channel scanning result within the preset time range corresponding to the trigger event.

In the embodiment of the present disclosure, the interference frequentness of the second wireless channel resource is acquired by counting the number of times of the interferences on the second wireless channel resource f₂ within the preset time range.

Optionally, the interference type of the second wireless channel resource is determined by comparing the interference frequentness with the preset condition corresponding to the trigger event.

The interference frequentness is compared with the preset condition to judge what kind of interference the interference of the second wireless channel resource f₂ belongs to, such as a long-term interference or a short-term interference.

Optionally, calculating the interference frequentness of the second wireless channel resource may further comprise:
acquiring channel data of the second wireless channel resource from the channel scanning result within the preset time range corresponding to the trigger event, wherein the channel data comprises at least a received signal indication strength and a duty cycle measured in real time;
identifying an interference state of the second wireless channel resource through the received signal indication strength and the duty cycle;
calculating a ratio of the number of times of the interferences within the preset time range to a total number of times of monitoring of the second wireless channel resource within the preset time range, and taking the ratio as the interference frequentness.

Index data that reflects the interference in the channel scanning result is acquired, such as interference measurement information, a measurement result, a received signal indication strength, a duty cycle, etc., wherein the received signal indication strength and the duty cycle are taken as an example.

The received signal indication strength in the channel scanning result is compared with a preset third threshold, and the duty cycle in the channel scanning result is compared with a preset fourth threshold.

If the received signal indication strength is lower than the third threshold and the duty cycle is higher than the fourth threshold, it is determined that the second wireless channel resource is in an interference state. Or, it is considered that the second wireless channel resource is interfered with once. Through a statistical analysis of the channel scanning results within the preset time range, the number of times of interferences on the second wireless channel resource within the preset time range is acquired, and the degree of interference on the second wireless channel resource within the preset time range may be determined through the number of times of interferences and the total number of times of monitoring of the second wireless channel resource. The interference environment of the second wireless channel resource may be judged by comparing the degree with the preset first threshold or second threshold.

Optionally, judging the interference type of the first wireless channel resource further comprises:
comparing the interference frequentness with the first threshold;
determining that the second wireless channel resource is under long-term interference if the interference frequentness is greater than the first threshold; or,
comparing the interference frequentness with the second threshold;
determining that the second wireless channel resource is under short-term interference if the interference frequentness is greater than the second threshold;
generating a channel indication message based on the interference type, wherein the channel indication message comprises a third wireless channel resource and configured to indicate a use authorization of the third wireless channel resource for the base station and at least one electronic label under the jurisdiction thereof.

In the embodiment of the present disclosure, according to the interference type of the second wireless channel resource, the central management device may dynamically allocate a new wireless channel resource to the base station, so as to avoid the influence of interferences and improve the communication efficiency.

After judging the interference type, the processor of the central management device 110 generates a channel indication message, which for example may be one of scheduling signaling, wireless resource control signaling and physical layer signaling. The channel indication message for example may comprise the newly allocated wireless channel resource and use indication information, wherein the newly allocated wireless channel resource may be frequency bands with different intervals in the same sub-frequency band as the second wireless channel resource, or may be frequency bands with different intervals in different sub-frequency bands. In order for distinguishing, the newly allocated wireless channel resource is referred to the third wireless channel resource. The use indication information may be realized by means of numeralization or identification to indicate a use authorization of the base station and the electronic label under the jurisdiction of the base station to use the third wireless channel resource, and the use authorization indicates whether to continue using the resources after the frequency hopping when this communication is ended. For example, after this communication is ended, the resources after the frequency hopping are used continuously as the default communication resources, or after this communication is ended, the resources after the frequency hopping are released, and the next communication is switched back to the default communication resources.

In the embodiment of the present disclosure, before step 310, the method may comprise:
sending a first information instruction to each of the base stations in the base station group, wherein the first information instruction is configured to instruct each of the base stations in the base station group to orderly perform wireless broadcasting on the first wireless channel resource, and
receiving the first information set reported by any one of the base stations in the base station group.
Transceiving means of the central management device 110 is configured to send a first information instruction to the base station and receive a first information set. The transceiving means may also be configured to receive a channel scanning result reported by a base station and send a channel indication message to the base station.

The central management device sends an information instruction to each of the base stations in the base station group to be allocated with resources. The information instruction comprises at least channel information configured to instruct the base station to orderly perform wireless broadcasting on the first wireless channel resource f₁. The information instruction may be a broadcast channel indication instruction, or any other instruction that carries broadcast channel resources.

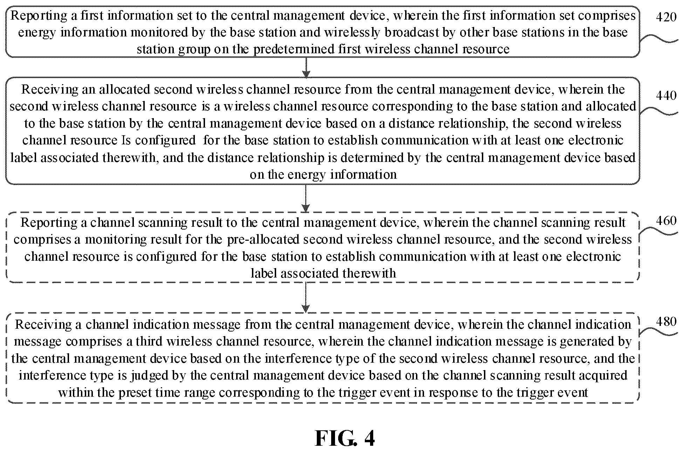

Based on the application scenario illustrated in FIG 1, an embodiment of the present disclosure provides another method for allocating wireless resources applied to an electronic label system. Please refer to FIG 4, FIG 4 illustrates a schematic flowchart of another method for allocating wireless resources provided by an embodiment of the present disclosure, and the method is described from the perspective of the base station.

As illustrated in FIG 4, the method may comprise:
Step 420: reporting a first information set to the central management device, wherein the first information set comprises energy information monitored by the base station and wirelessly broadcast by other base stations in the base station group on the predetermined first wireless channel resource.

In the embodiment of the present disclosure, the sending means of the base stations 120, 121, 122, 123, 124 and 125 report their respective first information sets to the central management device. For example, the first information set reported by the base station 120 may be {B₁₂₀-₁₂₁, B₁₂₀₋₁₂₂, B₁₂₀₋₁₂₃, B₁₂₀₋₁₂₄, B₁₂₀₋₁₂₅}, wherein B is energy information monitored by the base station and wirelessly broadcast by other base stations on the predetermined first wireless channel resource, and other base stations also report in the same way.

Step 440: receiving an allocated second wireless channel resource from the central management device, wherein the second wireless channel resource is a wireless channel resource corresponding to the base station and allocated to the base station by the central management device based on a distance relationship, the second wireless channel resource is configured for the base station to establish communication with at least one electronic label associated therewith, and the distance relationship is determined by the central management device based on the energy information.

In the embodiment of the present disclosure, the base stations 120, 121, 122, 123, 124 and 125 receive their respective second wireless channel resources from the central management device 110 through their respective receiving means, and use the second wireless channel resources to establish communications with electronic labels associated therewith.

Optionally, the method may comprise step 460: reporting a channel scanning result to the central management device, wherein the channel scanning result comprises a monitoring result for the pre-allocated second wireless channel resource, and the second wireless channel resource is configured for the base station to establish communication with at least one electronic label associated therewith.

In the embodiment of the present disclosure, after receiving the second wireless channel resource allocated by the central management device for the base station, the base station may also actively report the monitoring result of the second wireless channel resource through the sending means.

Optionally, the method may comprise step 480: receiving a channel indication message from the central management device, wherein the channel indication message comprises a third wireless channel resource, wherein the channel indication message is generated by the central management device based on the interference type of the second wireless channel resource, and the interference type is judged by the central management device based on the channel scanning result acquired within the preset time range corresponding to a trigger event in response to the trigger event.

In the embodiment of the present disclosure, the channel indication message comprises the third wireless channel resource. The channel indication message is generated by the central management device based on the interference type of the second wireless channel resource, and the interference type is judged by the central management device based on the channel scanning result acquired within the preset time range corresponding to a trigger event in response to the trigger event.

The channel indication message may further comprise a use indication, or a corresponding use indication is acquired according to the channel indication message, wherein the use indication is configured to indicate a use authorization of the third wireless channel resource.

Optionally, the method may further comprise:
controlling the at least one electronic label associated with the base station to establish communication according to the use authorization of the third wireless channel resource indicated by the channel indication message.

After receiving the channel indication message, the receiving means of the base station trigger the processor of the base station to use the third wireless channel resource provided by the channel indication message to establish communication with the electronic labels associated therewith, respectively.

For example, the base station 120 uses the third wireless channel resource f₃ to establish communication with the electronic labels 120-₁ and 12₀-ₙ, and modifies the third wireless channel resource f₃ as the default channel resource after the communication is completed according to the use indication in the channel indication message, or releases the third wireless communication resource f₃ after the communication is completed.

That is, if the use instruction is a first use instruction, the second wireless channel resource is modified as the first wireless channel resource after the communication with the electronic labels using the second wireless channel resource is completed; or, if the use instruction is a second use instruction, the second wireless channel resource is released after the communication with the electronic labels using the second wireless channel resource is completed, wherein the first use instruction and the second use instruction are used to distinguish the instruction content, and the form of the use instruction is not limited.

After the base station receives the channel indication message, the method may further comprise:
broadcasting the channel indication message to at least one electronic label under the jurisdiction of the base station.

In the embodiment of the present disclosure, the channel indication message is broadcast to at least one electronic label under the jurisdiction of the base station by the sending means of the base station.

In order to ensure the communication efficiency, the channel indication message may also be broadcast by increasing the energy value of the broadcast signal or and/or extending the broadcast time.

The embodiment of the present disclosure provides an intelligent frequency hopping solution by identifying interferences on the channel resources in real time in a changing wireless environment, so as to solve the problem of coexistence of the electronic label system with other same-frequency wireless communication products, thus improving the communication efficiency of the electronic label system.

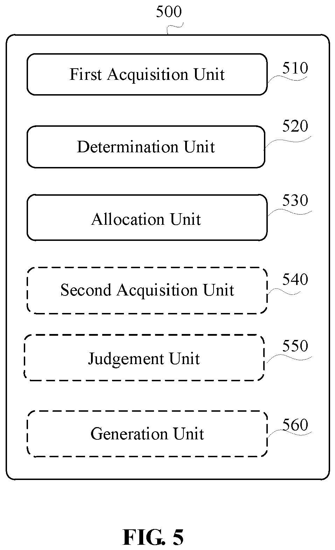

Based on the application scenario illustrated in FIG 1, an embodiment of the present disclosure provides a central management device applied to an electronic label system. Please refer to FIG 5, FIG 5 illustrates a schematic structural diagram of a central management device provided by an embodiment of the present disclosure.

As illustrated in FIG 5, the central management device 500 may comprise a first acquisition unit 510, a determination unit 520 and an allocation unit 530.

The first acquisition unit 510 is configured to acquire a first information set, wherein the first information set comprises energy information monitored by any one of base stations in a base station group to be allocated with resources and wirelessly broadcast by other base stations in the base station group on a predetermined first wireless channel resource.

In the embodiment of the present disclosure, the central management device 110 receives the respective first information sets reported by the base stations 120, 121, 122, 123, 124 and 125, and the first information set for example may be {B₁₂₀₋₁₂₁, B₁₂₀₋₁₂₂, B₁₂₀₋₁₂₃, B₁₂₀₋₁₂₄, B₁₂₀₋₁₂₅}, wherein B is energy information monitored by the base station and wirelessly broadcast by other base stations on the predetermined first wireless channel resource.

The determination unit 520 is configured to determine a distance relationship between the base stations in the base station group based on the energy information.

In the embodiment of the present disclosure, the central management device acquires the energy information of each of the base stations from the first information set, and then judges the distance of each of the base stations based on the energy information. For example, the judgment may be made through the energy value and the preset energy threshold, or according to whether the energy value lies within the preset energy threshold range, or according to a result of sorting the energy information in the first information set.

In which, the preset energy threshold and the energy threshold range may be obtained by learning according to a machine learning algorithm, or preset according to engineering experiences. As the energy value increases, the interference becomes more serious or the wireless communication is in progress. As the energy value decreases, the interference degree becomes lower.

In which, the energy threshold range for example may comprise a plurality of threshold ranges, such as a first threshold range [0, 60db], a second threshold range [60db to 80db], a third threshold range [80db to 100db], and a fourth threshold range [100db, +]. In which, a distance relationship corresponding to the first threshold range is a second distance relationship, and a distance relationship corresponding to the second, third, and fourth threshold ranges is a first distance relationship. In the embodiment of the present disclosure, a relationship between the base stations may be identified by a distance relationship. The distance relationships may be classified into the first distance relationship and the second distance relationship according to their influences on the use of the frequency band. The first distance relationship indicates that two distance-related base stations can use different second wireless channel resources to respectively establish communication with at least one electronic label associated therewith, without interfering with each other. The second distance relationship indicates that two distance-related base stations can use the same second wireless channel resource to respectively establish communication with at least one electronic label associated therewith, without interfering with each other. According to different threshold ranges corresponding to the energy information, the first distance relationship may also be divided into a plurality of subtypes, such as a first subtype, a second subtype, and a third subtype.

Regarding the second distance relationship, the wireless channel resources to be allocated may be in the same frequency band. Regarding the first distance relationship, the wireless channel resources to be allocated have to be in different frequency bands and a certain interval is required to be exited between the different frequency bands. Regarding the first subtype of the first distance relationship, the interval between the wireless channel resources to be allocated may be small, such as 1M or 2M. Regarding the third subtype of the first distance relationship, the interval between wireless channel resources to be allocated may be large, such as 5M.

For example, the distance relationship corresponding to the second threshold range is the first subtype, which means that the distance between the two base stations is large, and the interference degree is low, so the wireless channel resources to be allocated needs to meet the interval of 1M. The distance relationship corresponding to the third threshold range is the second subtype, which means that the distance between the two base stations is closer than that of the first subtype, and the wireless channel resources to be allocated should needs to meet a larger interval, such as 2M. The distance relationship corresponding to the third threshold range is the third subtype, which means that the distance between the two base stations is closer than that of the second subtype, and the wireless channel resources to be allocated needs to meet an even larger interval, such as 3M.

Regarding the division of the threshold range, the specific values 1M, 2M, and 3M of the interval between the frequency bands are only for the illustrative purpose, rather than specific limitations. The division and values can be adjusted according to the specific environment.

Preferably, the energy information comprises an energy value, and the distance relationship between the base stations in the base station group is determined based on the energy information, comprising:
judging an energy threshold range in which the energy value lies; and
determining a distance relationship between two base stations associated with the energy value according to the energy threshold range in which the energy value lies.

The allocation unit 530 is configured to allocate a corresponding second wireless channel resource to each of the base stations in the base station group based on the distance relationship, the second wireless channel resource being used for the base station to establish communication with at least one electronic label associated therewith.

In the embodiment of the present disclosure, after the distance relationship between the base stations is judged, the base station may be allocated with wireless channel resources according to a type corresponding to the distance relationship.

The distance relationship between the base stations may be judged according to the situation that the energy information lies within the preset energy threshold range. When the distance relationship comprises the first distance relationship, allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being in the first distance relationship, wherein the second wireless channel resources are separated by a preset interval frequency band, and the preset interval frequency band is corresponding to the first distance relationship.

When the first distance relationship comprises at least two subtypes, the allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being of the above subtypes, wherein the second wireless channel resources are separated by a preset interval frequency band, and the preset interval frequency band is corresponding to the above subtypes.

For example, the central management device 110 receives the first information set reported by the base station 120, and the first information set for example may be {B₁₂₀-₁₂₁, B₁₂₀₋₁₂₂, B₁₂₀₋₁₂₃, B₁₂₀₋₁₂₄, B₁₂₀₋₁₂₅}. The base station 120 monitors that B₁₂₀₋₁₂₁ of the base station 121 lies within [100, +], which means that the base station 120 and the base station 121 belong to the third subtype of the first distance relationship, and the allocation condition of the wireless channel resources which is corresponding to the third subtype needs to meet use of the wireless channel resources in different frequency bands, and there needs to be a large interval between the different frequency bands.

According to the distance relationship between the base station 120 and the base station 121, if the central management device allocates the second wireless channel resource f₂ to the base station 120, the second wireless channel resource to be allocated to the base station 121 should at least satisfy f₂ plus a spacing frequency band which for example may be 3M, 5M, etc.

When the distance relationship comprises the second distance relationship, allocating a corresponding second wireless channel resource to each of the base stations in the base station group based on the distance relationship may comprise:
taking any one of the base stations in the base station group as a reference base station, and allocating a corresponding second wireless channel resource to the reference base station;
allocating corresponding second wireless channel resources to the base stations determined as being of a second distance relationship, wherein the second wireless channel resources are the same.

For example, the base station 120 monitors that B₁₂₀₋₁₂₁ of the base station 121 lies within [0, 60db], which means that the base station 120 and the base station 121 belong to the second distance relationship, and the allocation condition of the wireless channel resources which are corresponding to the second distance relationship may be the wireless channel resources in the same frequency band. Since the distance between the base station 120 and the base station 121 is very large, even if the wireless channel resources in the same frequency band are used, it will not cause signal interference.

In the embodiment of the present disclosure, the second wireless channel resources may be further adjusted according to the trigger event acquired by the central management device, so as to improve the efficiency of resource management.

Preferably, the central management device 500 may further comprise:
a second acquisition unit 540 configured to, in response to a trigger event, acquire a channel scanning result within a preset time range corresponding to the trigger event, wherein the channel scanning result comprises a monitoring result of a corresponding second wireless channel resource pre-allocated to each of the base stations in the base station group, and the second wireless channel resource is used for the base station to establish communication with at least one electronic label associated therewith;
a judgment unit 550 configured to judge an interference type of the second wireless channel resource based on the channel scanning result within the preset time range corresponding to the trigger event;
a generation unit 560 configured to generate a channel indication message based on the interference type, wherein the channel indication message comprises a third wireless channel resource, and is configured to indicate a use authorization of the third wireless channel resource for the base station and at least one electronic label associated therewith.

While the channel scanning result within the preset time range corresponding to the trigger event is acquired in response to the trigger event, the preset condition corresponding to the trigger event is also acquired, or the preset condition corresponding to the trigger event is determined in response to the trigger event, or a default program is executed to call the preset conditions corresponding to the trigger event when the trigger event is received. The preset condition here, for example, may be a threshold such as the first threshold and/or the second threshold. The values of the first threshold and the second threshold for example may be an average number of times based on historical statistics of the system or the number of times set based on experiences, which is not limited here.

The interference type of the first wireless channel resource is judged based on the channel scanning result within the preset time range corresponding to the trigger event.

In the embodiment of the present disclosure, the interference type of the first wireless channel resource is judged by the channel scanning result within the preset time range, so as to determine the actual situation of the surrounding environment of the base station.

Optionally, an interference frequentness of the first wireless channel resource is calculated based on the channel scanning result within the preset time range corresponding to the trigger event.

In the embodiment of the present disclosure, the interference frequentness of the second wireless channel resource is acquired by counting the number of times of the interferences on the second wireless channel resource f₂ within the preset time range.

Optionally, the interference type of the second wireless channel resource is determined by comparing the above interference frequentness with the preset condition corresponding to the trigger event.

The interference frequentness is compared with the preset condition to judge what kind of interference the interference of the second wireless channel resource f₂ belongs to, such as a long-term interference or a short-term interference.

Optionally, calculating the interference frequentness of the second wireless channel resource may further comprise:
acquiring channel data of the second wireless channel resource from the channel scanning result within the preset time range corresponding to the trigger event, wherein the channel data comprises at least a received signal indication strength and a duty cycle measured in real time;
identifying an interference state of the second wireless channel resource through the received signal indication strength and the duty cycle;
calculating a ratio of the number of times of the interferences within the preset time range to the total number of times of monitoring of the second wireless channel resource within the preset time range, and taking the ratio as the interference frequentness.

It is acquired index data that reflects the interference in the channel scanning result, such as interference measurement information, a measurement result, a received signal indication strength, a duty cycle, etc., wherein the received signal indication strength and the duty cycle are taken as an example.

The received signal indication strength in the channel scanning result is compared with a preset third threshold, and the duty cycle in the channel scanning result is compared with a preset fourth threshold.

If the received signal indication strength is lower than the third threshold and the duty cycle is higher than the fourth threshold, it is determined that the second wireless channel resource is in an interference state. Or, it is considered that the second wireless channel resource is interfered with once. Through a statistical analysis of the channel scanning results within the preset time range, the number of times of interferences on the second wireless channel resource within the preset time range is acquired, and the degree of interference on the second wireless channel resource within the preset time range may be determined through the number of times of interferences and the total number of times of monitoring of the second wireless channel resource. The interference environment of the second wireless channel resource may be judged by comparing the degree with the preset first threshold or second threshold.

Optionally, judging the interference type of the first wireless channel resource further comprises:
comparing the interference frequentness with the first threshold;
determining that the second wireless channel resource is under long-term interference if the interference frequentness is greater than the first threshold; or,
comparing the interference frequentness with the second threshold;
determining that the second wireless channel resource is under short-term interference if the interference frequentness is greater than the second threshold;
generating a channel indication message based on the interference type, wherein the channel indication message comprises a third wireless channel resource and is configured to indicate a use authorization of the third wireless channel resource for the base station and at least one electronic label under the jurisdiction thereof.

In the embodiment of the present disclosure, according to the interference type of the second wireless channel resource, the central management device may dynamically allocate a new wireless channel resource to the base station, so as to avoid the influence of interferences and improve the communication efficiency.

After judging the interference type, the processor of the central management device 110 generates a channel indication message, which for example may be one of scheduling signaling, wireless resource control signaling and physical layer signaling. The channel indication message for example may comprise the newly allocated wireless channel resource and use indication information, wherein the newly allocated wireless channel resource may be frequency bands with different intervals in the same sub-frequency band as the second wireless channel resource, or may be frequency bands with different intervals in different sub-frequency bands. In order for distinguishing, the newly allocated wireless channel resource is referred to the third wireless channel resource. The use indication information may be realized by means of numeralization or identification to indicate a use authorization of the base station and the electronic label under the jurisdiction of the base station to use the third wireless channel resource, and the use authorization indicates whether to continue using the resources after the frequency hopping when the communication is ended. For example, after the communication is ended, the resources after the frequency hopping are used continuously as the default communication resources, or after the communication is ended, the resources after the frequency hopping are released, and the next communication is switched back to the default communication resources.

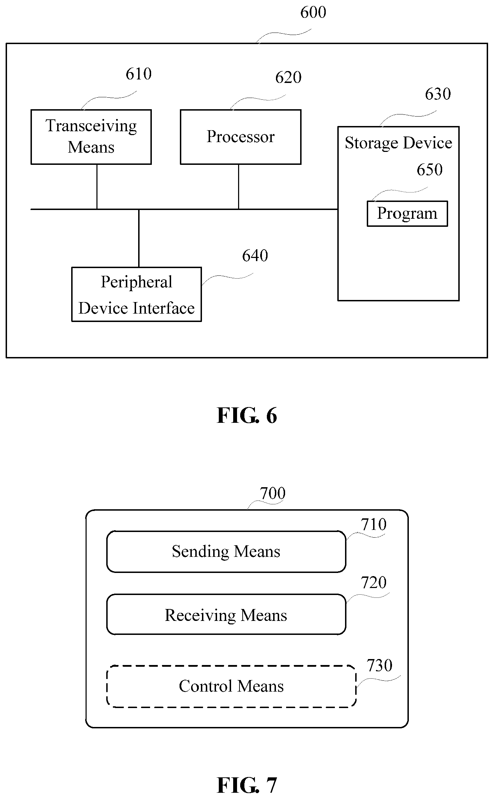

Based on the application scenario illustrated in FIG 1, an embodiment of the present disclosure provides a central management device applied to an electronic label system. Please refer to FIG 6, FIG 6 illustrates another schematic structural diagram of a central management device provided by an embodiment of the present disclosure.

As illustrated in FIG 6, the central management device 600 comprises: transceiving means 610 for communicating with a base station, and at least one processor 610.

The central management device 600 may comprise one or more transceiving means 610. The transceiving means 610 may comprise an Ethernet adapter, a wireless transceiver, etc., so as to communicate through a wired or wireless medium and using a protocol such as Ethernet, wireless Ethernet, or the like. The transceiving means 601 are configured to interact information with a base station, such as receiving a channel scanning result reported by the base station, sending various communication instructions to the base station to ensure that the base station can communicate with at least one electronic label under the jurisdiction thereof.

The central management device 600 may further comprise one or more processors 620 with different kernel configurations (comprising a plurality of kernels) and time frequencies. One or more processors 620 may be operable to execute instructions, application logics, and the like. It will be appreciated that these functions may be provided by a plurality of processors operating in parallel and/or communicatively linked together or a plurality of kernels on a single chip. By executing the corresponding program instructions, the processor 620 implements the method for allocating wireless resources illustrated in FIG 3 to schedule and manage the allocation of the wireless channel resources.

The central management device 600 may further comprise a storage device 630 which may be or comprise one or more memory devices and/or computer-readable media of various physical sizes, storage capabilities, storage capacities, etc., such as a flash drive, a disk, a random access memory, etc., to store data such as an images and a text, and program instructions for execution by the processor 620. The storage device 630 may also be at least one storage device located far away from the processor 620. There is no limitation in the embodiment of the present disclosure.

In the embodiment of the present disclosure, the storage device 603 may store instructions for operations performed by the processor 602. When requested by the processor 620, one or more programs 650 or a part thereof may be loaded from the storage device 630 to perform the wireless channel resource management method illustrated in FIG 3.

The central management device 600 comprises one or more peripheral device interfaces 640 configured to communicate with one or more displays, input devices, and the like. The peripheral device interface 640 may also communicate with any input and/or output peripheral device such as a keyboard, a mouse, and a touch pad.

Based on the application scenario illustrated in FIG 1, an embodiment of the present disclosure provides another base station applied to an electronic label system. Please refer to FIG 7, FIG 7 illustrates a schematic structural diagram of a base station provided by an embodiment of the present disclosure. The base station 700 may be the base stations 120, 121, 122, 123, 124 and 125 illustrated in FIG 1.

As illustrated in FIG 7, the base station 700 may comprise:
sending means 710 configured to report a first information set to the central management device, wherein the first information set comprises energy information monitored by the base station and wirelessly broadcast by other base stations in the base station group on the predetermined first wireless channel resource;
receiving means 720 configured to receive a second wireless channel resource allocated by the central management device, wherein the second wireless channel resource is a wireless channel resource corresponding to the base station and allocated to the base station by the central management device based on a distance relationship, the second wireless channel resource is used for the base station to establish communication with at least one electronic label associated therewith, and the distance relationship is determined by the central management device based on the energy information.

Optionally, the sending means 710 are further configured to report a channel scanning result to the central management device, wherein the channel scanning result comprises a monitoring result for the pre-allocated second wireless channel resource, the second wireless channel resource being used for the base station to establish communication with at least one electronic label associated therewith.

Optionally, the receiving means 720 are further configured to receive a channel indication message from the central management device, wherein the channel indication message comprises a third wireless channel resource, wherein the channel indication message is generated by the central management device based on the interference type of the second wireless channel resource, and the interference type is judged by the central management device based on the channel scanning result acquired within the preset time range corresponding to a trigger event in response to the trigger event.

In the embodiment of the present disclosure, the channel indication message comprises the third wireless channel resource. The channel indication message is generated by the central management device based on the interference type of the second wireless channel resource, and the interference type is judged by the central management device based on the channel scanning result acquired within the preset time range corresponding to a trigger event in response to the trigger event.

The channel indication message may further comprise a use indication, or a corresponding use indication is acquired according to the channel indication message, wherein the use indication is configured to indicate a use authorization of the third wireless channel resource.

Optionally, the base station may further comprise:
control means 730 configured to control the at least one electronic label associated with the base station to establish communication according to the use authorization of the third wireless channel resource indicated by the channel indication message.

After receiving the channel indication message, the receiving means of the base station triggers the processor of the base station to use the third wireless channel resource provided by the channel indication message to establish communication with the electronic labels associated therewith, respectively.

For example, the base station 120 uses the third wireless channel resource f₃ to establish communication with the electronic labels 120₋₁ and 12₀₋ₙ, and modifies the third wireless channel resource f₃ as the default channel resource after the communication is completed according to the use indication in the channel indication message, or releases the third wireless communication resource f₃ after the communication is completed.

That is, if the use instruction is a first use instruction, the second wireless channel resource is modified as the first wireless channel resource after the communication with the electronic labels using the second wireless channel resource is completed; or, if the use instruction is a second use instruction, the second wireless channel resource is released after the communication with the electronic labels using the second wireless channel resource is completed, wherein the first use instruction and the second use instruction are used to distinguish the instruction content, and the form of the use instruction is not limited.

After the receiving means of the base station receives the channel indication message, the base station may further comprise:
the sending means 710 further configured to broadcast the channel indication message to at least one electronic label under the jurisdiction of the base station.

In the embodiment of the present application, the channel indication message is broadcast, by the sending means of the base station, to at least one electronic label under the jurisdiction of the base station.

In order to ensure the communication efficiency, the channel indication message may also be broadcast by increasing the energy value of the broadcast signal and/or extending the broadcast time.

The embodiment of the present disclosure provides an intelligent frequency hopping solution by identifying interferences on the channel resources in real time in a changing wireless environment, so as to solve the problem of coexistence of the electronic label system with other same-frequency wireless communication products, thus improving the communication efficiency of the electronic label system.

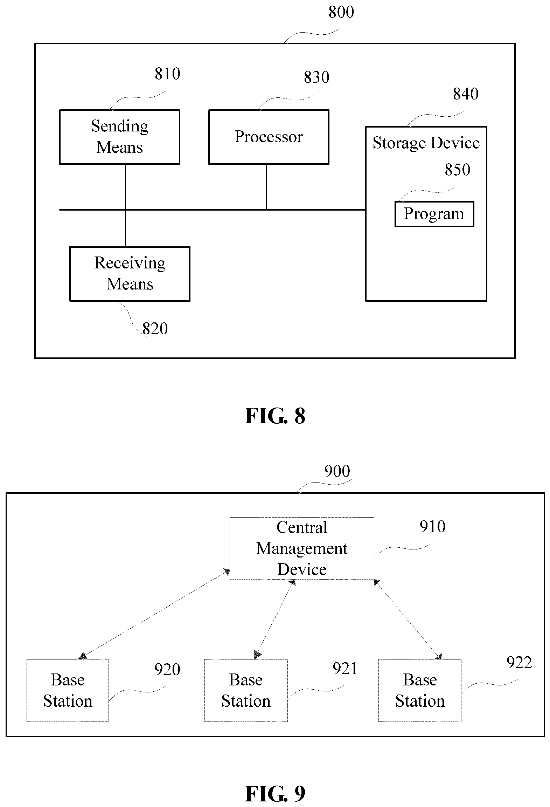

Based on the application scenario illustrated in FIG 1, an embodiment of the present disclosure provides a base station applied to an electronic label system. Please refer to FIG 8,

FIG 8 illustrates another schematic structural diagram of a base station provided by an embodiment of the present disclosure. The base station 800 may be the base stations 120, 121, 122, 123, 124 and 125 involved in the above embodiments.

As illustrated in FIG. 8, the base station 800 may comprise: sending means 810 configured to communicate with the central management device 101, receiving device 820, and at least one processor 830.

The base station 800 may comprise one or more sending means 810 and receiving means 820, and may also be one or more transceiving means. The sending means and the transceiving means may comprise an Ethernet adapter, a wireless transceiver, etc., so as to communicate through a wired or wireless medium and using a protocol such as Ethernet, wireless Ethernet, or the like. The sending means and the receiving device are configured to interact information with the central management device 110. For example, the receiving means 820 receive the second wireless channel resource and/or the channel indication message sent by the central management device 110, and the sending means 810 report the first information set and/or the channel scanning result to the central management device 110.

The base station 800 may further comprise one or more processors 830 with different kernel configurations (comprising a plurality of kernels) and time frequencies. One or more processors 830 may be operable to execute instructions, application logic, and the like. It will be appreciated that these functions may be provided by a plurality of processors operating in parallel and/or communicatively linked together or a plurality of kernels on a single chip. By executing the corresponding program instructions, the processor 830 implements the wireless channel resource management method illustrated in FIG 4 to schedule and manage the allocation of the wireless channel resources.

The base station 800 may further comprise a memory system which may be or comprise one or more memory devices and/or computer-readable media 840 of various physical sizes, storage capabilities, storage capacities, etc., such as a flash drive, a disk, a random access memory, etc., to store data such as an images and a text, and program instructions for execution by the processor 830. The memory system may also be at least one storage device located far away from the processor 830. There is no limitation in the embodiment of the present disclosure.

In the embodiment of the present disclosure, the computer-readable medium 840 may store instructions for operations performed by the processor 830. When requested by the processor 830, one or more programs 850 or a part thereof may be loaded from the computer-readable medium 840 to perform the method for allocating wireless resources illustrated in FIG 4.

Based on the application scenario illustrated in FIG 1, an embodiment of the present disclosure provides an electronic label system. Please refer to FIG 9, FIG 9 illustrates a schematic structural diagram of the electronic label system provided by an embodiment of the present disclosure. It is used to execute the above radio resource management method provided in the embodiments of the present application.

In which, the electronic label system 900 may comprise a central management device 910, at least two base stations 920, 921 and 922, and a plurality of electronic labels associated therewith (not illustrated in FIG 9, and may comprise the electronic labels illustrated in FIG 1).

In which, the structure and function of the central management device 910 are the same as those of the central management device described in the foregoing embodiments, and will not be repeated here. The structure and function of the base stations 920, 921 and 922 are the same as the base stations described in the foregoing embodiments, and will not be repeated here.

It should be noted that although the operations of the method of the present disclosure are illustrated in a specific order in the drawings, it does not require or imply that those operations have to be performed in the specific order, or that all the operations illustrated have to be performed to achieve the desired result. Conversely, the execution order of the steps depicted in the flowchart can be changed. Additionally or alternatively, some steps may be omitted, a plurality of steps may be combined into one step, and/or one step may be decomposed into a plurality of steps. For example, the interference type of the first wireless channel resource is determined based on the channel scanning result within the preset time range corresponding to the trigger event, and the channel indication message is generated based on the interference type.

In the above embodiments, the descriptions thereof have their respective focuses. For a part not described in detail in one embodiment, reference may be made to related descriptions in other embodiments.

The steps in the method of the embodiments of the present disclosure can be adjusted in their order, combined, and deleted according to actual needs.

The flowcharts and block diagrams in the drawings illustrate the implementable system architectures, functions, and operations of the system, the method, and the computer program product according to various embodiments of the present disclosure. In this regard, each block in the flowchart or block diagram can represent a module, a program segment, or a part of the codes, which contains one or more executable instructions for implementing specified logical functions. It should also be noted that, in some alternative implementations, the functions marked in the blocks may also occur in a different order from that marked in the drawings. For example, two blocks illustrated in succession can actually be executed substantially in parallel, and they can sometimes be executed in a reverse order, depending on the functions involved. It should also be noted that each block in the block diagram and/or flowchart, and combinations thereof can be implemented by a dedicated hardware-based system that performs the specified functions or operations, by a combination of dedicated hardware and computer instructions.

The units or modules involved in the embodiments described in the present disclosure can be implemented by software or hardware. The described units or modules may also be provided in the processor, for example, the description may be: a processor, comprising an acquisition unit, a judgment unit, and a generation unit. In which, the names of these units or modules do not constitute limitations on these units or modules per se under certain circumstances. For example, the acquisition unit may also be described as "a unit configured to acquire a channel scanning result within a preset time range corresponding to a trigger event".

In another aspect, the present disclosure further provides a computer-readable storage medium, which may be the computer-readable storage medium contained in the aforementioned central management device and base station in the above embodiments, or may be a standalone computer-readable storage medium not equipped into the device. The computer-readable storage medium stores one or more programs, which are adopted by one or more processors to execute the method for allocating wireless resources described in the present disclosure.

The above descriptions are just the preferred embodiments of the present disclosure and explanations of the applied technical principles. Those skilled in the art should understand that the scope of the invention involved in the present disclosure is not limited to the technical solutions formed by specific combinations of the above technical features, and should also cover other technical solutions formed by arbitrary combinations of the above technical features and their equivalents without departing from the foregoing concept of invention, such as the technical solutions formed by mutually replacing the above technical features and those disclosed in the present disclosure (but not limited to) with similar functions.

## Claims

1. A method for allocating wireless resources, wherein the method is performed by a central management device and comprises:
acquiring a first information set, wherein the first information set comprises energy information monitored by any one of base stations in a base station group to be allocated with resources and wirelessly broadcast by other base stations in the base station group on a predetermined first wireless channel resource;
determining a distance relationship between the base stations in the base station group based on the energy information; and
allocating a corresponding second wireless channel resource to each of the base stations in the base station group based on the distance relationship, wherein the second wireless channel resource is configured for the base station to establish communication with at least one electronic label associated therewith.

2. The method according to claim 1, wherein the energy information comprises an energy value, and the determining a distance relationship between the base stations in the base station group based on the energy information comprises:
judging an energy threshold range in which the energy value lies; and
determining a distance relationship between two base stations associated with the energy value according to the energy threshold range in which the energy value lies.

3. The method according to claim 2, wherein the distance relationship comprises a first distance relationship and/or a second distance relationship,
wherein the first distance relationship indicates that two distance-related base stations use different second wireless channel resources to respectively establish communication with at least one electronic label associated therewith, without interfering with each other;
the second distance relationship indicates that two distance-related base stations use the same second wireless channel resource to respectively establish communication with at least one electronic label associated therewith, without interfering with each other.

4. The method according to claim 3, wherein when the distance relationship comprises the first distance relationship, the allocating a corresponding second wireless channel resource to each of the base stations in the base station group based on the distance relationship comprises:
taking any one of the base stations in the base station group as a reference base station, and allocating a corresponding second wireless channel resource to the reference base station;
allocating corresponding second wireless channel resources to the base stations determined as being in the first distance relationship, the second wireless channel resources being separated by a preset interval frequency band, wherein the preset interval frequency band is corresponding to the first distance relationship.

5. The method according to claim 3 or 4, wherein when the distance relationship comprises the second distance relationship, the allocating a corresponding second wireless channel resource to each of the base stations in the base station group based on the distance relationship comprises:
taking any one of the base stations in the base station group as a reference base station, and allocating a corresponding second wireless channel resource to the reference base station;
allocating corresponding second wireless channel resources to the base stations determined as being in the second distance relationship, wherein the second wireless channel resources are the same.

6. The method according to claim 4, wherein when the distance relationship comprises the first distance relationship which further comprises at least two subtypes, the allocating a corresponding second wireless channel resource to each of the base stations in the base station group based on the distance relationship comprises:
taking any one of the base stations in the base station group as a reference base station, and allocating a corresponding second wireless channel resource to the reference base station;
allocating corresponding second wireless channel resources to the base stations determined as being of the subtypes, the second wireless channel resources being separated by a preset interval frequency band, wherein the preset interval frequency band is corresponding to the subtypes.

7. The method according to any one of claims 1 to 6, wherein after allocating a corresponding second wireless channel resource to each of the base stations in the base station group based on the distance relationship, the method further comprises:
in response to a trigger event, acquiring a channel scanning result within a preset time range corresponding to the trigger event, wherein the channel scanning result comprises a monitoring result of a corresponding second wireless channel resource pre-allocated to each of the base stations in the base station group, and the second wireless channel resource is configured for the base station to establish communication with at least one electronic label associated therewith;
judging an interference type of the second wireless channel resource based on the channel scanning result within the preset time range corresponding to the trigger event;
generating a channel indication message based on the interference type, wherein the channel indication message comprises a third wireless channel resource and is configured to indicate a use authorization of the third wireless channel resource for the base station and at least one electronic label associated therewith.

8. The method according to any one of claims 1 to 7, wherein before acquiring the first information set, the method further comprises:
sending a first information instruction, wherein the first information instruction is configured to instruct each of the base stations in the base station group to orderly perform wireless broadcasting on the first wireless channel resource, and
receiving the first information set reported by any one of the base stations in the base station group.

9. A method for allocating wireless resources, wherein the method is performed by any one of base stations in a base station group, and comprises:
reporting a first information set to a central management device, wherein the first information set comprises energy information monitored by the base station and wirelessly broadcast by other base stations in the base station group on a predetermined first wireless channel resource;
receiving an allocated second wireless channel resource from the central management device, wherein the second wireless channel resource is a wireless channel resource corresponding to the base station and allocated to the base station by the central management device based on a distance relationship between the base station and the other base stations, the second wireless channel resource is configured for the base station to establish communication with at least one electronic label associated therewith, and the distance relationship is determined by the central management device based on the energy information.

10. The method according to claim 9, wherein before reporting a first information set to a central management device, the method further comprises:
receiving a first information instruction transmitted by the central management device, wherein the first information instruction is configured to instruct each of the base stations in the base station group to orderly perform wireless broadcasting on the first wireless channel resource;
wirelessly broadcasting on the first wireless channel resource.

11. The method according to claim 9 or 10, wherein after receiving an allocated second wireless channel resource from the central management device, the method further comprises:
reporting a channel scanning result to the central management device, wherein the channel scanning result comprises a monitoring result for the pre-allocated second wireless channel resource, and the second wireless channel resource is configured for the base station to establish communication with at least one electronic label associated therewith;
receiving a channel indication message from the central management device, wherein the channel indication message comprises a third wireless channel resource, wherein the channel indication message is generated by the central management device based on the interference type of the second wireless channel resource, and the interference type is judged by the central management device based on the channel scanning result acquired within the preset time range corresponding to a trigger event in response to the trigger event; and then
controlling the at least one electronic label associated with the base station to establish communication according to a use authorization of the second wireless channel resource indicated by the channel indication message.

12. A method for allocating wireless resources, wherein the method is applied to an electronic label system comprising a central management device and at least one base station group, and comprises:
reporting, by any base station in the base station group, a first information set to the central management device, wherein the first information set comprises energy information monitored by the base station and wirelessly broadcast by other base stations in the base station group on a predetermined first wireless channel resource;
determining, by the central management device, a distance relationship between the base stations in the base station group based on the energy information; and allocating a corresponding second wireless channel resource to each of the base stations in the base station group based on the distance relationship, wherein the second wireless channel resource is configured for the base station to establish communication with at least one electronic label associated therewith;
receiving, by the base station, the second wireless channel resource allocated by the central management device.

13. The method according to claim 12, further comprising:
in response to a trigger event, acquiring, by the central management device, a channel scanning result within a preset time range corresponding to the trigger event, wherein the channel scanning result comprises a monitoring result of a corresponding second wireless channel resource pre-allocated to each of the base stations in the base station group, and the second wireless channel resource is configured for the base station to establish communication with at least one electronic label associated therewith;
judging an interference type of the second wireless channel resource based on the channel scanning result within the preset time range corresponding to the trigger event;
generating a channel indication message based on the interference type, wherein the channel indication message comprises a third wireless channel resource and is configured to indicate a use authorization of the third wireless channel resource for the base station and at least one electronic label associated therewith;
receiving, by the base station, the channel indication message from the central management device, and then controlling at least one electronic label associated with the base station to establish communication according to the use authorization of the second wireless channel resource indicated by the channel indication message.

14. A central management device, comprising:
one or more processors;
storage means configured to store one or more programs;
transceiving means configured to receive a first information set reported by any base station in a base station group, wherein the first information set comprises energy information monitored by the base station and wirelessly broadcast by other base stations in the base station group on a predetermined first wireless channel resource;
the processor configured to implement the method according to any one of claims 1 to 7 when executing the programs.

15. A base station, wherein the base station is any base station in a base station group and comprises:
sending means configured to report a first information set to a central management device, wherein the first information set comprises energy information monitored by the base station and wirelessly broadcast by other base stations in the base station group on a predetermined first wireless channel resource;
receiving means configured to receive a second wireless channel resource allocated by the central management device, wherein the second wireless channel resource is a wireless channel resource corresponding to the base station and allocated to the base station by the central management device based on a distance relationship between the base station and the other base stations, wherein the second wireless channel resource is configured for the base station to establish communication with at least one electronic label associated therewith, and the distance relationship is determined by the central management device based on the energy information.

16. The base station according to claim 15, wherein
the receiving means is further configured to receive a first information instruction sent from the central management device, wherein the first information instruction is configured to instruct each of the base stations in the base station group to orderly perform wireless broadcasting on the first wireless channel resource;
the sending means is further configured to wirelessly broadcast on the first wireless channel resource.

17. The base station according to claim 15 or 16, wherein
the sending means is further configured to report a channel scanning result to the central management device, wherein the channel scanning result comprises a monitoring result for the pre-allocated second wireless channel resource, and the second wireless channel resource is configured for the base station to establish communication with at least one electronic label associated therewith;
the receiving means is further configured to receive a channel indication message from the central management device, wherein the channel indication message comprises a third wireless channel resource, wherein the channel indication message is generated by the central management device based on an interference type of the second wireless channel resource, and the interference type is judged by the central management device based on the channel scanning result acquired within the preset time range corresponding to a trigger event in response to the trigger event.

18. An electronic label system, comprising the central management device according to claim 14 and at least two base stations according to any one of claims 15 to 17.

19. A computer readable storage medium with a computer program stored thereon, wherein the method according to any one of claims 1 to 7 is implemented when the program is executed by a processor.
